# EUROPEAN PATENT APPLICATION

(11) **EP 4 421 546 A1**
(43) Date of publication of application: **28.08.2024**
(21) Application number: 21962881.5
(22) Date of filing: 04.11.2021
(51) Int. Cl.: G02B 6/26

(54) **END FACE COUPLER AND OPTICAL COMMUNICATION DEVICE**

(71) Applicant: Huawei Technologies Co., Ltd., Shenzhen, Guangdong 518129 (CN)
(72) Inventor: WU, Yangbo, Shenzhen, Guangdong 518129 (CN)
(74) Representative: Körber, Martin Hans
(86) International application number: PCT/CN2021/128741
(87) International publication number: WO 2023/077364

(57) **Abstract**

This application discloses an end-face coupler and an optical communication apparatus, and relates to the optical communication field. The end-face coupler includes a middle waveguide and a cladding. A cross section of the middle waveguide has a first direction and a second direction that are perpendicular to each other, and the first direction is the same as a length direction of the middle waveguide. The middle waveguide is located in the cladding, and the middle waveguide includes a first layer body and a second layer body. The first layer body includes a first part and a second part that are sequentially connected in the first direction. A size of the first part in the second direction is not greater than a size of the second part in the second direction, and two side faces of the second part that extend in the first direction are parallel. The second layer body is stacked on the first layer body, an orthographic projection of the second layer body on a cross section of the first layer body is located in the second part of the first layer body, and an end that is of the second layer body and that is away from the first part is flush with an end that is of the second part and that is away from the first part. The end-face coupler and the optical communication apparatus provided in embodiments of this application can resolve a problem of a large coupling loss.

## Description

### TECHNICAL FIELD

This application relates to the optical communication field, and in particular, to an end-face coupler and an optical communication apparatus.

### BACKGROUND

An optical communication apparatus based on a silicon photonics technology mainly includes an optoelectronic chip and an optical fiber, and an optical signal needs to be propagated between the optoelectronic chip and the optical fiber. Because a mode field diameter (mode field diameter, MFD) of a silicon waveguide of the optoelectronic chip differs greatly from a mode field diameter of the optical fiber, a spot size of the silicon waveguide of the optoelectronic chip differs greatly from that of the optical fiber. If the silicon waveguide and the optical fiber are directly coupled to propagate an optical signal, a coupling loss is very large.

### SUMMARY

Embodiments of this application provide an end-face coupler and an optical communication apparatus, to overcome a problem of a large coupling loss in a related technology.

According to a first aspect, an end-face coupler is provided. The end-face coupler includes a middle waveguide and a cladding, and the middle waveguide is located in the cladding. A cross section of the middle waveguide has a first direction and a second direction, the first direction is the same as a length direction of the middle waveguide, and the second direction is perpendicular to the first direction. The middle waveguide includes a first layer body and a second layer body, the first layer body includes a first part and a second part, and the first part and the second part are sequentially connected in the first direction. A size of the first part in the second direction is not greater than a size of the second part in the second direction. The second part has two side faces in the first direction, and the two side faces are parallel to each other. The second layer body is stacked on the first layer body, and an orthographic projection of the second layer body on a cross section of the first layer body is located in the second part of the first layer body, that is, the second layer body is stacked on the second part and does not exceed an outer edge of the second part. An end that is of the second layer body and that is away from the first part is flush with an end that is of the second part and that is away from the first part.

The end-face coupler provided in this embodiment of this application has at least the following effect.

The end-face coupler is arranged between a silicon waveguide and an optical fiber, so that an end that is of the first part and that is away from the second part is coupled to an end of the optical fiber. In addition, because the end that is of the second part and that is away from the first part is flush with the end that is of the second layer body and that is away from the first part, the end that is of the second part and that is away from the first part and the end that is of the second layer body and that is away from the first part can be separately coupled to the silicon waveguide. An optical signal output by the optical fiber is coupled into the end-face coupler through the end that is of the first part and that is away from the second part. Because a size of the end that is of the first part and that is away from the second part is small, a spot size is large, and an end face of a device can have a large overlap integral with the optical fiber. With propagation of the optical signal, the optical signal enters the second part from the first part. Because a size of the second part is greater than a size of the first part, the spot size is decreased accordingly. With further propagation of the optical signal, the optical signal enters a part in which the second part and the second layer body are stacked together. Because a size of the second layer body is increased in this part, the spot size is further decreased accordingly. In this way, when the optical signal is coupled to the silicon waveguide, the spot size already matches a spot size of the silicon waveguide, thereby reducing a loss generated when the optical signal is coupled between the optical fiber and the silicon waveguide.

In other words, the end-face coupler provided in this embodiment of this application is disposed between the optical fiber and the silicon waveguide, so that low-loss transmission of the optical signal can be implemented between the optical fiber and the silicon waveguide.

In an implementation of this application, the first part has two ends in the first direction, a first end of the first part is an end away from the second part, and a second end of the first part is an end close to the second part. The size of the first part in the second direction gradually increases from the first end of the first part to the second end of the first part. To be specific, if the optical signal enters from the first end of the first part, in a process of propagating the optical signal to the second end of the first part, a spot size gradually increases until the optical signal is propagated to the second part. In this design, a mode field diameter difference between adjacent interfaces is small, and reflection of the optical signal can be effectively reduced, thereby reducing interference. Correspondingly, if the optical signal enters from the second end of the first part, in a process of propagating the optical signal to the first end of the first part, the spot size gradually decreases until the optical signal is output from the first end of the first part. In this way, reflection of the optical signal in the propagation process is also reduced. In addition, difficulty in manufacturing the first layer body can be further reduced, thereby effectively improving a manufacturing yield.

In an implementation of this application, the size of the second part in the second direction is the same as a size of the second end of the first part in the second direction. After the size of the first part in the second direction gradually increases from the first end of the first part to the second end of the first part, the first part can smoothly transit to and be connected to the second part, thereby avoiding a sudden change in the sizes of the first part and the second part. In this design, a mode field diameter difference between adjacent interfaces can be small, and reflection of the optical signal can be effectively reduced, thereby reducing interference. In addition, difficulty in manufacturing the first layer body can be further reduced, thereby effectively improving a manufacturing yield.

In an implementation of this application, the second layer body includes a third part and a fourth part, and the third part and the fourth part are sequentially connected in the first direction. A size of the third part in the second direction is not greater than a size of the fourth part in the second direction. The second layer body is stacked on the second part, so that a mode field diameter of the part can be increased, thereby decreasing a corresponding spot size. An optical signal is propagated in the first direction, and the third part and the fourth part are also sequentially connected in the first direction. Therefore, the size of the fourth part in the second direction is designed to be greater than the size of the third part in the second direction, so that a mode field diameter of a part in which the second layer body and the first layer body are stacked can gradually increase, that is, the spot size gradually increases. In this way, a mode field diameter difference between adjacent interfaces is small, and reflection of the optical signal can be effectively reduced, thereby reducing interference. In addition, difficulty in manufacturing the first layer body and the second layer body can be further reduced, thereby effectively improving a manufacturing yield.

In an implementation of this application, the third part has two ends in the first direction, a first end of the third part is an end away from the fourth part, and a second end of the third part is an end close to the fourth part. The size of the third part in the second direction gradually increases from the first end of the third part to the second end of the third part. To be specific, if the optical signal enters from the first end of the third part, in a process of propagating the optical signal to the second end of the third part, a spot size gradually increases until the optical signal is propagated to the fourth part. In this design, a mode field diameter difference between adjacent interfaces is small, and reflection of the optical signal can be effectively reduced, thereby reducing interference. In addition, difficulty in manufacturing the second layer body can be further reduced, thereby effectively improving a manufacturing yield.

In an implementation of this application, the size of the fourth part in the second direction is the same as a size of the second end of the third part in the second direction. After the size of the third part in the second direction gradually increases from the first end of the third part to the second end of the third part, the third part can smoothly transit to and be connected to the fourth part, thereby avoiding a sudden change in the sizes of the third part and the fourth part. In this design, a mode field diameter difference between adjacent interfaces can be small, and reflection of the optical signal can be effectively reduced, thereby reducing interference. In addition, difficulty in manufacturing the second layer body can be further reduced, thereby effectively improving a manufacturing yield.

In an implementation of this application, the size of the fourth part in the second direction is the same as the size of the second part in the second direction. Because the two side faces of the second part that extend in the first direction are parallel, and the orthographic projection of the second layer body on the cross section of the first layer body is located in the second part of the first layer body, two side faces of the fourth part that extend in the first direction are also parallel and are respectively flush with the two side faces of the second part that extend in the first direction. In this design, mode field diameters of the second part and the fourth part can be conveniently controlled, and difficulty in manufacturing the first layer body and the second layer body is reduced, thereby effectively improving a manufacturing yield.

In an implementation of this application, the first end of the third part is located at a joint between the first part and the second part. The size of the first part in the second direction gradually increases from the first end of the first part to the second end of the first part, and the size of the second part in the second direction remains unchanged. Therefore, the first end of the third part is designed at the joint between the first part and the second part, so that a change in a mode field diameter of the middle waveguide can be better controlled, and difficulty in manufacturing the middle waveguide is reduced, thereby effectively improving a manufacturing yield.

In an implementation of this application, the end-face coupler further includes a side waveguide, and the side waveguide and the middle waveguide are spaced from each other and arranged in parallel. A first end of the side waveguide is flush with the end that is of the first part and that is away from the second part, and a size of the side waveguide in the first direction is not greater than a size of the middle waveguide in the first direction, that is, a second end of the side waveguide does not exceed the middle waveguide in the first direction. A size of the side waveguide in the second direction is the same as a size, in the second direction, of the end that is of the first part and that is away from the second part, that is, the size of the side waveguide in the second direction remains unchanged. Because a size of an optical fiber is large, the side waveguide is designed on a side of a central optical fiber, so that efficiency of coupling between the optical fiber and the end-face coupler can be improved, and polarization sensitivity can be reduced. In addition, with propagation of an optical signal, because a size of the middle waveguide increases, and a size of the side waveguide remains unchanged, an optical signal in the side waveguide can be coupled to a central waveguide through adiabatic coupling.

In an implementation of this application, the second end of the side waveguide is flush with the joint between the first part and the second part. In this design, it can be ensured that an optical signal propagated in the side waveguide can be completely coupled to the second part.

In an implementation of this application, the size of the side waveguide in the second direction is the same as the size, in the second direction, of the end that is of the first part and that is away from the second part. In this design, it can be ensured that a loss of coupling between the side waveguide and an optical fiber is the same as a loss of coupling between the middle waveguide and the optical fiber. In addition, difficulty in manufacturing the end-face coupler is reduced, thereby effectively improving a manufacturing yield.

In an implementation of this application, the end-face coupler includes at least two side waveguides. A part of the at least two side waveguides is located on one side of the middle waveguide, and the other part of the at least two side waveguides is located on the other side of the middle waveguide. In other words, the side waveguides are respectively located on two sides of the middle waveguide, so that the end-face coupler is better coupled to an optical fiber, thereby improving efficiency of coupling between the optical fiber and the end-face coupler and reducing polarization sensitivity.

In an implementation of this application, the middle waveguide and the side waveguide are located in a same plane. In this design, the middle waveguide and the side waveguide can be conveniently manufactured, thereby improving manufacturing efficiency of the end-face coupler.

According to a second aspect, an optical communication apparatus is provided. The optical communication apparatus includes an end-face coupler, an optical fiber, and an optoelectronic chip. The end-face coupler is the end-face coupler according to the first aspect, the end-face coupler is located between the optical fiber and the optoelectronic chip, and the end-face coupler is separately coupled to the optical fiber and the optoelectronic chip.

The optical communication apparatus provided in this embodiment of this application has at least the following effect.

The end-face coupler is configured between a silicon waveguide and an optical fiber, so that an end that is of the first part and that is away from the second part is coupled to an end of the optical fiber. In addition, because the end that is of the second part and that is away from the first part is flush with the end that is of the second layer body and that is away from the first part, the end that is of the second part and that is away from the first part and the end that is of the second layer body and that is away from the first part can be separately coupled to the silicon waveguide. An optical signal output by the optical fiber is coupled into the end-face coupler through the end that is of the first part and that is away from the second part. Because a size of the end that is of the first part and that is away from the second part is small, a spot size is large, and an end face of a device can have a large overlap integral with the optical fiber. With propagation of the optical signal, the optical signal enters the second part from the first part. Because a size of the second part is greater than a size of the first part, the spot size is decreased accordingly. With further propagation of the optical signal, the optical signal enters a part in which the second part and the second layer body are stacked together. Because a size of the second layer body is increased in this part, the spot size is further decreased accordingly. In this way, when the optical signal is coupled to the silicon waveguide, the spot size already matches a spot size of the silicon waveguide, thereby reducing a loss generated when the optical signal is coupled between the optical fiber and the silicon waveguide.

In other words, in the optical communication apparatus provided in this embodiment of this application, the end-face coupler is disposed between the optical fiber and the silicon waveguide, so that low-loss transmission of the optical signal can be implemented between the optical fiber and the silicon waveguide by using the end-face coupler.

### BRIEF DESCRIPTION OF DRAWINGS

FIG. 1 is a diagram of a structure of an end-face coupler according to an embodiment of this application;
FIG. 2 is a top view of a middle waveguide according to an embodiment of this application;
FIG. 3 is a top view of a middle waveguide according to an embodiment of this application;
FIG. 4 is a diagram of a structure of an end-face coupler according to an embodiment of this application;
FIG. 5 is a top view of a middle waveguide and a side waveguide according to an embodiment of this application;
FIG. 6 is a diagram marking a size of an end-face coupler according to an embodiment of this application;
FIG. 7 is a diagram marking a size of an end-face coupler according to an embodiment of this application; and
FIG. 8 is a diagram of a structure of an optical communication apparatus according to an embodiment of this application.

### Reference numerals:

1. middle waveguide;
11. first layer body;
111. first part; 111a. first side face; 111b. second side face; 112. second part;
12. second layer body;
121. third part; 121a. third side face; 121b. fourth side face; 122. fourth part;
2. cladding;
3. side waveguide;
a. first direction; b. second direction;
1000. end-face coupler;
2000. optical fiber;
3000. optoelectronic chip; and 3100. silicon waveguide.

### DESCRIPTION OF EMBODIMENTS

To make the objectives, technical solutions, and advantages of this application clearer, the following further describes the implementations of this application in detail with reference to the accompanying drawings.

In a related technology, there are some optical communication apparatuses based on a silicon photonics technology, for example, a silicon photonics based optical module and a silicon photonics based onboard optical engine. This type of optical communication apparatus mainly includes an optoelectronic chip and an optical fiber configured to output an optical signal. Because a mode field diameter (mode field diameter, MFD) of a silicon waveguide of the optoelectronic chip differs greatly from a mode field diameter of the optical fiber, a spot size of the silicon waveguide of the optoelectronic chip differs greatly from that of the optical fiber. If the silicon waveguide and the optical fiber are directly coupled, a coupling loss is very large.

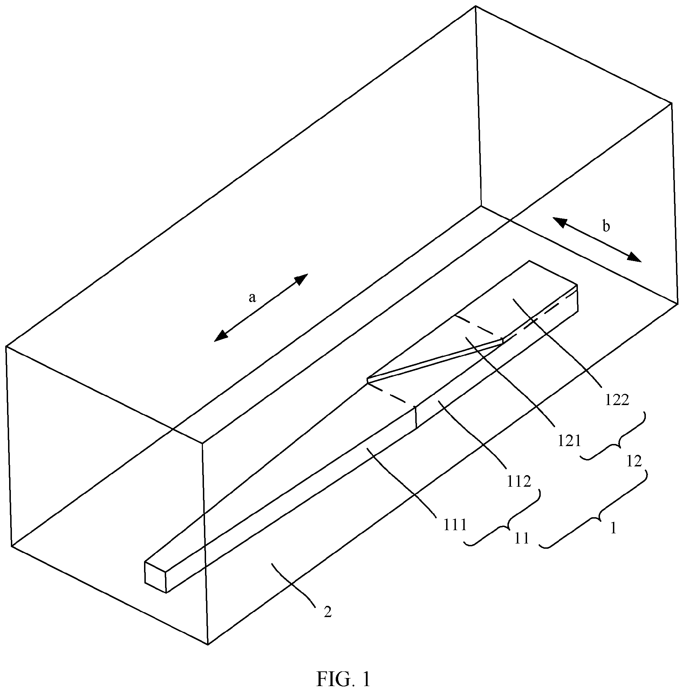

To resolve the foregoing technical problem, an embodiment of this application provides an end-face coupler. FIG. 1 is a diagram of a structure of the end-face coupler. Dashed lines in FIG. 1 represent virtual dividing lines between two adjacent parts, and are merely used to distinguish between two different parts, to facilitate understanding of the accompanying drawing. These dashed lines do not have entities. In addition, this is applicable to other accompanying drawings.

Refer to FIG. 1. In this embodiment, the end-face coupler includes a middle waveguide 1 and a cladding 2.

A cross section of the middle waveguide 1 has a first direction a and a second direction b that are perpendicular to each other, the first direction a is the same as a length direction of the middle waveguide 1, and the middle waveguide 1 is located in the cladding 2. The middle waveguide 1 includes a first layer body 11 and a second layer body 12. The first layer body 11 includes a first part 111 and a second part 112 that are sequentially connected in the first direction a. A size of the first part 111 in the second direction b is not greater than a size of the second part 112 in the second direction b. Two side faces of the second part 112 that extend in the first direction a are parallel.

The second layer body 12 is stacked on the first layer body 11, an orthographic projection of the second layer body 12 on a cross section of the first layer body 11 is located in the second part 112 of the first layer body 11, and an end that is of the second layer body 12 and that is away from the first part 111 is flush with an end that is of the second part 112 and that is away from the first part 111.

The end-face coupler is configured in an optical communication apparatus, where the end-face coupler is arranged between a silicon waveguide and an optical fiber. An end that is of the first part 111 and that is away from the second part 112 is coupled to an end of the optical fiber. Because the end that is of the second part 112 and that is away from the first part 111 is flush with the end that is of the second layer body 12 and that is away from the first part 111, the end that is of the second part 112 and that is away from the first part 111 and the end that is of the second layer body 12 and that is away from the first part 111 are separately coupled to the silicon waveguide. In this way, the end-face coupler is configured between the silicon waveguide and the optical fiber.

For example, an optical signal is propagated from the optical fiber to the silicon waveguide. The optical signal output by the optical fiber is coupled into the end-face coupler through the end that is of the first part 111 and that is away from the second part 112. Because a size of the end that is of the first part 111 and that is away from the second part 112 is small, a spot size is large, and an end face of a device can have a large overlap integral with the optical fiber. With propagation of the optical signal, the optical signal enters the second part 112 from the first part 111. Because a size of the second part 112 is greater than a size of the first part 111, the spot size is decreased accordingly. With further propagation of the optical signal, the optical signal enters a part in which the second part 112 and the second layer body 12 are stacked together. Because a size of the second layer body 12 is increased in this part, the spot size is further decreased accordingly. In this way, when the optical signal is coupled to the silicon waveguide, the spot size already matches a spot size of the silicon waveguide, thereby reducing a loss generated when the optical signal is coupled between the optical fiber and the silicon waveguide.

For example, an optical signal is propagated from the silicon waveguide to the optical fiber. The optical signal output by the silicon waveguide is coupled into the end-face coupler through the end that is of the second part 112 and that is away from the first part 111 and the end that is of the second layer body 12 and that is away from the first part. Because the second part 112 and the second layer body 12 are stacked together herein, a size is large, a spot size is small, and coupling with a low loss can be implemented between the optical fiber and the silicon waveguide. With propagation of the optical signal, the optical signal enters the first part 111. Because the second layer body 12 is not stacked on the first part 111, and a size of the first part 111 is less than a size of the second part 112, the size is decreased accordingly, and the spot size is increased accordingly. In this way, when the optical signal is coupled to the optical fiber, the spot size already matches a spot size of the optical fiber, thereby reducing a loss generated when the optical signal is coupled between the silicon waveguide and the optical fiber.

In other words, the end-face coupler provided in this embodiment of this application is disposed between the optical fiber and the silicon waveguide, so that low-loss transmission of the optical signal can be implemented between the optical fiber and the silicon waveguide.

It can be learned from the foregoing that, the end-face coupler provided in this embodiment of this application can reduce the loss generated when the optical signal is coupled between the optical fiber and the silicon waveguide because a size of the middle waveguide 1 in the second direction b changes in the first direction a. The following separately describes the first layer body 11 and the second layer body 12 of the middle waveguide 1.

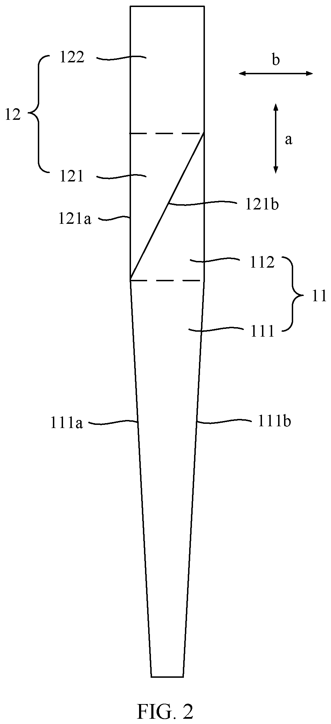

FIG. 2 is a top view of the middle waveguide 1, and a view angle of the top view is a top view angle of FIG. 1. With reference to FIG. 2, in this embodiment, the end that is of the first part 111 and that is away from the second part 112 is a first end, and an end that is of the first part 111 and that is close to the second part 112 is a second end. The size of the first part 111 in the second direction b gradually increases from the first end of the first part 111 to the second end of the first part 111.

In the foregoing implementation, the first part 111 is approximately in a shape of a long strip and extends in the first direction a. In a propagation process of an optical signal, for example, the optical signal is propagated from an optical fiber to a silicon waveguide, if the optical signal enters the first part 111 from the first end of the first part 111, in the propagation process, a spot size gradually increases until the optical signal is propagated to the second part 112. In this design, in the first part 111, a mode field diameter difference between adjacent interfaces is small, and reflection of the optical signal can be effectively reduced, thereby reducing interference. Correspondingly, if the optical signal enters from the second end of the first part 111, in a process of propagating the optical signal to the first end of the first part 111, the spot size gradually decreases until the optical signal is output from the first end of the first part 111. In this way, reflection of the optical signal in the propagation process is also reduced. In addition, difficulty in manufacturing the first layer body 11 can be further reduced, thereby effectively improving a manufacturing yield.

In this embodiment, the first part 111 has a first side face 111a and a second side face 111b that are opposite to each other, and the first side face 111a and the second side face 111b approximately extend in the first direction a and are located in the second direction b.

In an implementation of this embodiment, both the first side face 111a and the second side face 111b are planes (refer to FIG. 2), and there is an included angle between the first side face 111a and the second side face 111b.

When both the first side face 111a and the second side face 11 1b are planes, for example, a cross section of the first part 111 is a trapezoid, a top base of the trapezoid is located at the first end of the first part 111, a bottom base of the trapezoid is located at the second end of the first part 111, and two legs of the trapezoid are respectively located on the first side face 111a and the second side face 111b. Alternatively, the cross section of the first part 111 is a triangle, an angle of the triangle is located at the first end of the first part 111, an edge opposite to the angle is located at the second end of the first part 111, and the other two edges of the triangle are respectively located on the first side face 111a and the second side face 111b. In this embodiment, the cross section of the first part 111 is an isosceles trapezoid.

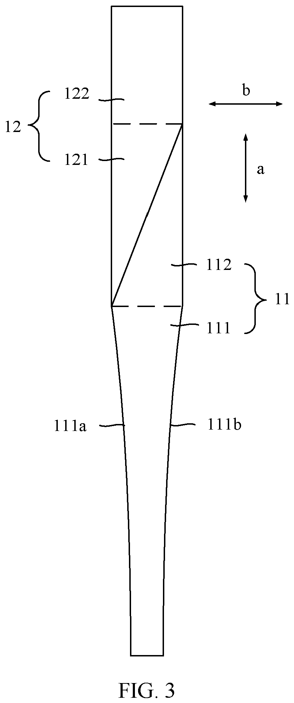

In an implementation of this embodiment, both the first side face 111a and the second side face 111b are curved faces (refer to FIG. 3), and the first side face 111a and the second side face 111b smoothly transit from the first end of the first part 111 to the second end, so that the size of the first part 111 in the second direction b gradually increases from the first end of the first part 111 to the second end of the first part 111.

It should be noted that, in another embodiment, the first side face 111a and the second side face 111b may alternatively be in other shapes, provided that the size of the first part 111 in the second direction b gradually increases from the first end of the first part 111 to the second end of the first part 111.

Still refer to FIG. 2. In this embodiment, the size of the second part 112 in the second direction b is the same as a size of the second end of the first part 111 in the second direction b.

In the foregoing implementation, after the size of the first part 111 in the second direction b gradually increases from the first end of the first part 111 to the second end of the first part 111, the first part 111 can smoothly transit to and be connected to the second part 112, thereby avoiding a sudden change in the sizes of the first part 111 and the second part 112. In this design, a mode field diameter difference between adjacent interfaces can be small, and reflection of the optical signal can be effectively reduced, thereby reducing interference. In addition, difficulty in manufacturing the first layer body 11 can be further reduced, thereby effectively improving a manufacturing yield.

The first part 111 of the first layer body 11 is described above. The following describes the second part 112 of the first layer body 11 and a relationship between the second part 112 and the first part 111.

Still refer to FIG. 2. In this embodiment, the second layer body 12 includes a third part 121 and a fourth part 122 that are sequentially connected in the first direction a, and a size of the third part 121 in the second direction b is not greater than a size of the fourth part 122 in the second direction b.

The second layer body 12 is stacked on the second part 112, so that a mode field diameter of the part can be increased, thereby decreasing a corresponding spot size. The optical signal is propagated in the first direction a, and the third part 121 and the fourth part 122 are also sequentially connected in the first direction a. Therefore, the size of the fourth part 122 in the second direction b is designed to be greater than the size of the third part 121 in the second direction b, so that a mode field diameter of a part in which the second layer body 12 and the first layer body 11 are stacked can gradually increase, that is, the spot size gradually increases. In this way, a mode field diameter difference between adjacent interfaces is small, and reflection of the optical signal can be effectively reduced, thereby reducing interference. In addition, difficulty in manufacturing the first layer body 11 and the second layer body 12 can be further reduced, thereby effectively improving a manufacturing yield.

In this embodiment, an end that is of the third part 121 and that is away from the fourth part 122 is a first end, and an end that is of the third part 121 and that is close to the fourth part 122 is a second end. The size of the third part 121 in the second direction b gradually increases from the first end of the third part 121 to the second end of the third part 121.

In the foregoing implementation, the third part 121 is approximately in a shape of a long strip and extends in the first direction a. In a propagation process of an optical signal, for example, the optical signal is propagated from an optical fiber to a silicon waveguide, if the optical signal enters from the first end of the third part 121, in a process of propagating the optical signal to the second end of the third part 121, a spot size gradually increases until the optical signal is propagated to the fourth part 122. In this design, a mode field diameter difference between adjacent interfaces is small, and reflection of the optical signal can be effectively reduced, thereby reducing interference. In addition, difficulty in manufacturing the second layer body 12 can be further reduced, thereby effectively improving a manufacturing yield.

In this embodiment, the third part 121 has a third side face 121a and a fourth side face 121b that are opposite to each other, and the third side face 121a and the fourth side face 121b approximately extend in the first direction a and are located in the second direction b.

In an implementation of this embodiment, both the third side face 121a and the fourth side face 121b are planes (refer to FIG. 2), and there is an included angle between the third side face 121a and the fourth side face 121b.

When both the third side face 121a and the fourth side face 121b are planes, for example, a cross section of the third part 121 is a trapezoid, a top base of the trapezoid is located at the first end of the third part 121, a bottom base of the trapezoid is located at the second end of the third part 121, and two legs of the trapezoid are respectively located on the third side face 121a and the fourth side face 121b. Alternatively, the cross section of the third part 121 is a triangle, an angle of the triangle is located at the first end of the third part 121, an edge opposite to the angle is located at the second end of the third part 121, and the other two edges of the triangle are respectively located on the third side face 121a and the fourth side face 121b. In this embodiment, the cross section of the third part 121 is a right-angled triangle, and a right angle of the right-angled triangle is located at the second end of the third part 121.

Still refer to FIG. 2. In this embodiment, the size of the fourth part 122 in the second direction b is the same as the size of the second part 112 in the second direction b.

Because the two side faces of the second part 112 that extend in the first direction a are parallel, and the orthographic projection of the second layer body 12 on the cross section of the first layer body 11 is located in the second part 112 of the first layer body 11, two side faces of the fourth part 122 that extend in the first direction a are also parallel and are respectively flush with the two side faces of the second part 112 that extend in the first direction a. In this design, mode field diameters of the second part 112 and the fourth part 122 can be conveniently controlled, and difficulty in manufacturing the first layer body 11 and the second layer body 12 is reduced, thereby effectively improving a manufacturing yield.

In this embodiment, the first end of the third part 121 is located at a joint between the first part 111 and the second part 112.

In the foregoing implementation, the size of the first part 111 in the second direction b gradually increases from the first end of the first part 111 to the second end of the first part 111, and the size of the second part 112 in the second direction b remains unchanged. Therefore, the first end of the third part 121 is designed at the joint between the first part 111 and the second part 112, so that a change in a mode field diameter of the middle waveguide 1 can be better controlled. To be specific, in a propagation process of an optical signal, in a phase in the first part 111, a spot size gradually changes. After the optical signal enters the second part 112, if the second layer body 12 is not considered, the spot size does not change. Therefore, the first end of the third part 121 is designed at the joint between the first part 111 and the second part 112, so that when the optical signal is propagated to the second part 112, because the third part 121 is stacked on the second part 112, and a size of the third part 121 gradually changes, it is equivalent to that a size of the whole of the second part 112 and the third part 121 is increased, and the spot size continues to gradually change.

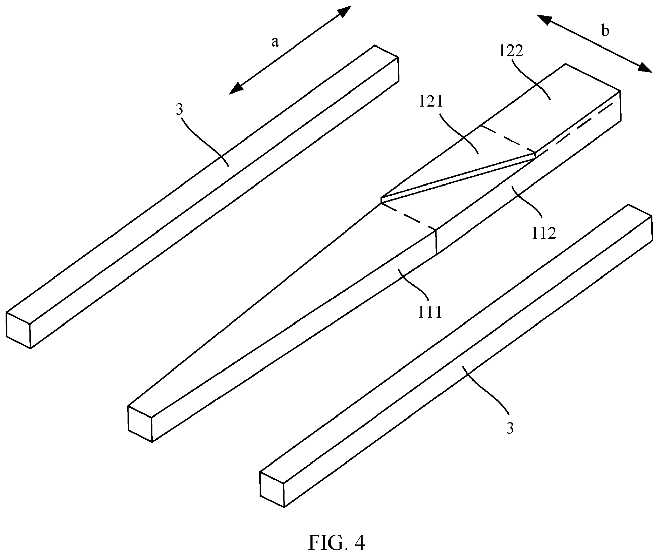

Because a size of an optical fiber is large, if only the middle waveguide 1 is disposed, coupling efficiency may be low. To resolve the problem, FIG. 4 is a diagram of a structure of an end-face coupler. To better show an internal structure of the cladding 2, the cladding 2 is omitted in FIG. 4. With reference to FIG. 4, in this embodiment, the end-face coupler further includes a side waveguide 3. The side waveguide 3 and the middle waveguide 1 are spaced from each other and arranged in parallel. A first end of the side waveguide 3 is flush with the end that is of the first part 111 and that is away from the second part 112. A size of the side waveguide 3 in the first direction a is not greater than a size of the middle waveguide 1 in the first direction a, and a size of the side waveguide 3 in the second direction b is not greater than a size, in the second direction b, of the end that is of the first part 111 and that is away from the second part 112.

With propagation of an optical signal, because a size of the middle waveguide 1 increases, and a size of the side waveguide 3 remains unchanged, an optical signal in the side waveguide 3 can be coupled to a central waveguide through adiabatic coupling, without a need for a device such as an MMI (Multimode Interference, multimode interference coupler).

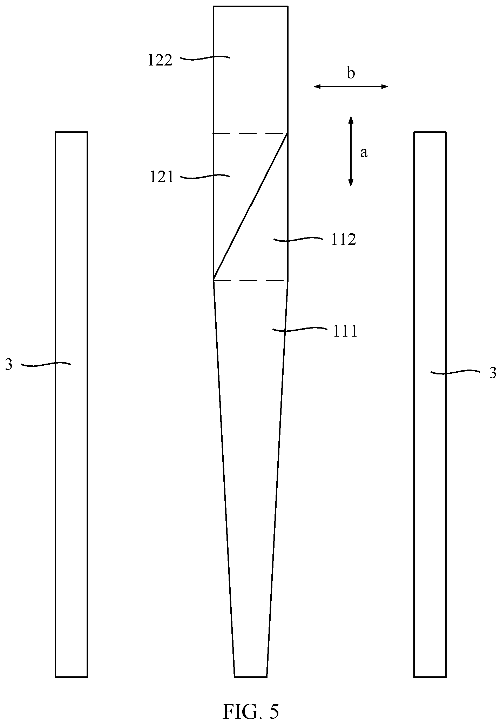

FIG. 5 is a top view of the middle waveguide 1 and the side waveguide 3, and a view angle of the top view is a top view angle of FIG. 4. With reference to FIG. 5, in this embodiment, a second end of the side waveguide 3 is flush with the joint between the first part 111 and the second part 112.

In this design, it can be ensured that an optical signal propagated in the side waveguide 3 can be completely coupled to the second part 112.

In this embodiment, the size of the side waveguide 3 in the second direction b is the same as the size, in the second direction b, of the end that is of the first part 111 and that is away from the second part 112.

In the foregoing implementation, it can be ensured that a loss of coupling between the side waveguide 3 and an optical fiber is the same as a loss of coupling between the middle waveguide 1 and the optical fiber. In addition, difficulty in manufacturing the end-face coupler is reduced, thereby effectively improving a manufacturing yield.

Still refer to FIG. 5. In this embodiment, the end-face coupler includes at least two side waveguides 3. A part of the at least two side waveguides 3 is located on one side of the middle waveguide 1, and the other part of the at least two side waveguides 3 is located on the other side of the middle waveguide 1.

In other words, the side waveguides 3 are respectively located on two sides of the middle waveguide 1, so that the end-face coupler is better coupled to an optical fiber, thereby improving efficiency of coupling between the optical fiber and the end-face coupler and reducing polarization sensitivity.

For example, the end-face coupler includes two side waveguides 3, one of the two side waveguides 3 is located on one side of the middle waveguide 1, and the other of the two side waveguides 3 is located on the other side of the middle waveguide 1.

In this embodiment, in an implementation of this application, the middle waveguide 1 and the side waveguide 3 are located in a same plane. In this design, the middle waveguide 1 and the side waveguide 3 can be conveniently manufactured, thereby improving manufacturing efficiency of the end-face coupler.

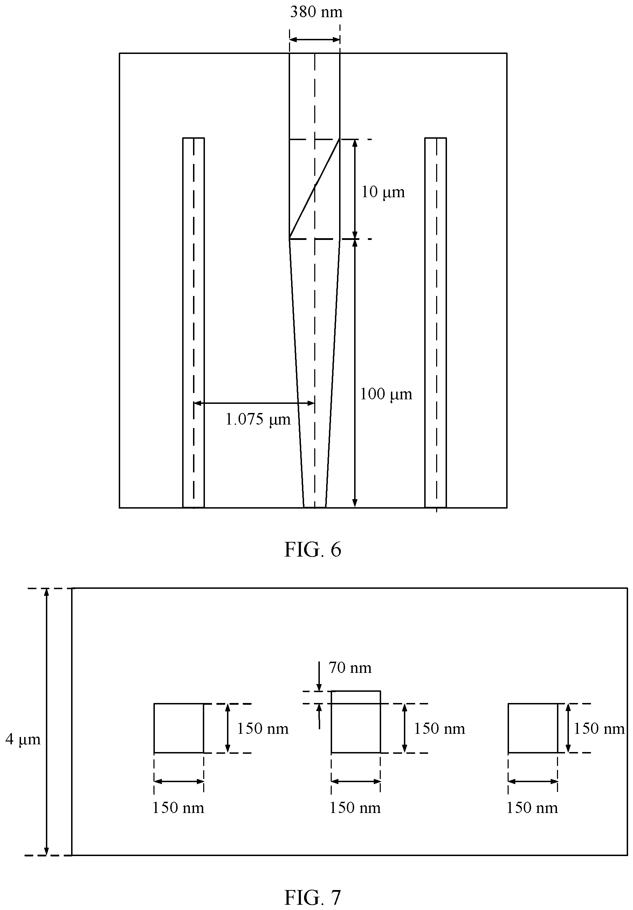

FIG. 6 and FIG. 7 are diagrams marking sizes of an end-face coupler, FIG. 6 is a top view angle of the end-face coupler, and FIG. 7 is a front view angle of the end-face coupler. It should be noted that, size proportions of parts in FIG. 6 and FIG. 7 are merely used as examples, and are not used as a limitation on the size proportions of the parts. Sizes of parts of the end-face coupler are subject to the following.

With reference to FIG. 6 and FIG. 7, in this embodiment, a thickness of the cladding 2 is 4 µm, a distance between a central line of the middle waveguide 1 and a central line of an adjacent side waveguide 3 is 1.075 µm, an end face size of the first end of the first part 111 is 150 nm* 150 nm, an end face size of a corresponding side waveguide 3 is also 150 nm* 150 nm, a length of the first part 111 in the first direction a is 100 µm, the size of the second end of the first part 111 in the second direction b is 380 nm, a thickness of the second layer body 12 is 70 nm, a length of the third part 121 in the first direction a is 10 µm, and a size of the second end of the third part 121 in the second direction b is 380 nm.

It should be noted that, the foregoing sizes of the parts of the end-face coupler all are used as examples. In another embodiment, sizes of the parts of the end-face coupler can be adjusted based on an actual requirement. This is not limited in this application.

Simulation is performed on the end-face coupler, and the following results are obtained.

An overlap integral of a TE (Transverse Electric, transverse electric wave) mode field of the end-face coupler and a mode field of a Gaussian light spot (generated by an optical fiber) with a diameter of 3 µm is 89.9%. Considering refractive index difference between the end-face coupler and an end face of the optical fiber and a spot conversion structure, overall efficiency of coupling from the optical fiber to the silicon waveguide is 83.9%.

An overlap integral of a TM (Transverse Magnetic, transverse magnetic wave) mode field of the end-face coupler and a mode field of a Gaussian light spot (generated by an optical fiber) with a diameter of 3 µm is 92.8%. Considering refractive index difference between the end-face coupler and an end face of the optical fiber and a spot conversion structure, overall efficiency of coupling from the optical fiber to the silicon waveguide is 86.3%.

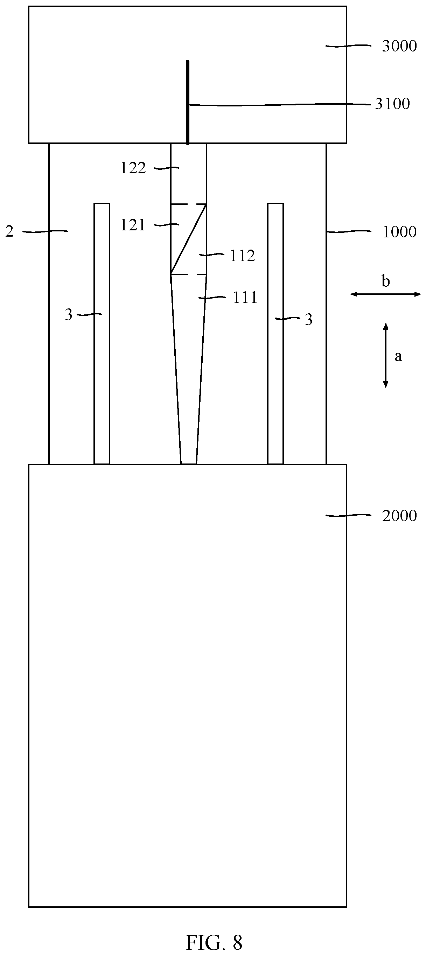

FIG. 8 is a diagram of a structure of an optical communication apparatus according to an embodiment of this application. Refer to FIG. 8. The optical communication apparatus includes an end-face coupler 1000, an optical fiber 2000, and an optoelectronic chip 3000. The end-face coupler 1000 is the end-face coupler described above, the end-face coupler 1000 is located between the optical fiber 2000 and the optoelectronic chip 3000, and the end-face coupler 1000 is separately coupled to the optical fiber 2000 and the optoelectronic chip 3000.

The end-face coupler 1000 is configured between the optoelectronic chip 3000 and the optical fiber 2000. The end that is of the first part 111 and that is away from the second part 112 is coupled to an end of the optical fiber 2000. Because the end that is of the second part 112 and that is away from the first part 111 is flush with the end that is of the second layer body 12 and that is away from the first part 111, the end that is of the second part 112 and that is away from the first part 111 and the end that is of the second layer body 12 and that is away from the first part 111 are separately coupled to a silicon waveguide 3100 of the optoelectronic chip 3000. In this way, the end-face coupler 1000 is configured between the optoelectronic chip 3000 and the optical fiber 2000, so that the end-face coupler 1000 is separately coupled to the optoelectronic chip 3000 and the optical fiber 2000.

For example, an optical signal is propagated from the optical fiber 2000 to the silicon waveguide 3100. The optical signal output by the optical fiber 2000 is coupled into the end-face coupler 1000 through the end that is of the first part 111 and that is away from the second part 112. Because a size of the end that is of the first part 111 and that is away from the second part 112 is small, a spot size is large, and an end face of a device can have a large overlap integral with the optical fiber. With propagation of the optical signal, the optical signal enters the second part 112 from the first part 111. Because a size of the second part 112 is greater than a size of the first part 111, the spot size is decreased accordingly. With further propagation of the optical signal, the optical signal enters a part in which the second part 112 and the second layer body 12 are stacked together. Because a size of the second layer body 12 is increased in this part, the spot size is further decreased accordingly. In this way, when the optical signal is coupled to the silicon waveguide 3100, the spot size already matches a spot size of the silicon waveguide 3100, thereby reducing a loss generated when the optical signal is coupled between the optical fiber 2000 and the silicon waveguide 3100.

For example, an optical signal is propagated from the silicon waveguide 3100 to the optical fiber 2000. The optical signal output by the silicon waveguide 3100 is coupled into the end-face coupler 1000 through the end that is of the second part 112 and that is away from the first part 111 and the end that is of the second layer body 12 and that is away from the first part. Because the second part 112 and the second layer body 12 are stacked together herein, a size is large, a spot size is small, and coupling with a low loss can be implemented between the optical fiber and the silicon waveguide 3100. With propagation of the optical signal, the optical signal enters the first part 111. Because the second layer body 12 is not stacked on the first part 111, and a size of the first part 111 is less than a size of the second part 112, the size is decreased accordingly, and the spot size is increased accordingly. In this way, when the optical signal is coupled to the optical fiber 2000, the spot size already matches a spot size of the optical fiber 2000, thereby reducing a loss generated when the optical signal is coupled between the silicon waveguide 3100 and the optical fiber 2000.

In other words, in the optical communication apparatus provided in this embodiment of this application, the end-face coupler 1000 is disposed between the optical fiber 2000 and the optoelectronic chip 3000, so that low-loss transmission of the optical signal can be implemented between the optical fiber 2000 and the silicon waveguide 3100 by using the end-face coupler 1000.

The foregoing descriptions are merely example embodiments of this application, but are not intended to limit this application. Any modification, equivalent replacement, or improvement made without departing from the spirit and principle of this application shall fall within the protection scope of this application.

## Claims

1. An end-face coupler, comprising a middle waveguide (1) and a cladding (2), wherein
a cross section of the middle waveguide (1) has a first direction and a second direction that are perpendicular to each other, and the first direction is the same as a length direction of the middle waveguide (1);
the middle waveguide (1) is located in the cladding (2), and the middle waveguide (1) comprises a first layer body (11) and a second layer body (12);
the first layer body (11) comprises a first part (111) and a second part (112) that are sequentially connected in the first direction, a size of the first part (111) in the second direction is not greater than a size of the second part (112) in the second direction, and two side faces of the second part (112) that extend in the first direction are parallel; and
the second layer body (12) is stacked on the first layer body (11), an orthographic projection of the second layer body (12) on a cross section of the first layer body (11) is located in the second part of the first layer body (11), and an end that is of the second layer body (12) and that is away from the first part (111) is flush with an end that is of the second part (112) and that is away from the first part (111).

2. The end-face coupler according to claim 1, wherein an end that is of the first part (111) and that is away from the second part (112) is a first end, and an end that is of the first part (111) and that is close to the second part (112) is a second end; and
the size of the first part (111) in the second direction gradually increases from the first end of the first part (111) to the second end of the first part (111).

3. The end-face coupler according to claim 2, wherein the size of the second part (112) in the second direction is the same as a size of the second end of the first part (111) in the second direction.

4. The end-face coupler according to claim 2 or 3, wherein the second layer body (12) comprises a third part (121) and a fourth part (122) that are sequentially connected in the first direction; and
a size of the third part (121) in the second direction is not greater than a size of the fourth part (122) in the second direction.

5. The end-face coupler according to claim 4, wherein an end that is of the third part (121) and that is away from the fourth part (122) is a first end, and an end that is of the third part (121) and that is close to the fourth part (122) is a second end; and
the size of the third part (121) in the second direction gradually increases from the first end of the third part (121) to the second end of the third part (121).

6. The end-face coupler according to claim 5, wherein the size of the fourth part (122) in the second direction is the same as a size of the second end of the third part (121) in the second direction.

7. The end-face coupler according to claim 5 or 6, wherein the size of the fourth part (122) in the second direction is the same as the size of the second part (112) in the second direction.

8. The end-face coupler according to any one of claims 5 to 7, wherein the first end of the third part (121) is located at a joint between the first part (111) and the second part (112).

9. The end-face coupler according to any one of claims 1 to 8, wherein the end-face coupler further comprises a side waveguide (3); and
the side waveguide (3) and the middle waveguide (1) are spaced from each other and arranged in parallel, a first end of the side waveguide (3) is flush with the end that is of the first part (111) and that is away from the second part (112), a size of the side waveguide (3) in the first direction is not greater than a size of the middle waveguide (1) in the first direction, and a size of the side waveguide (3) in the second direction is not greater than a size, in the second direction, of the end that is of the first part (111) and that is away from the second part (112).

10. The end-face coupler according to claim 9, wherein a second end of the side waveguide (3) is flush with the joint between the first part (111) and the second part (112).

11. The end-face coupler according to claim 9 or 10, wherein the size of the side waveguide (3) in the second direction is the same as the size, in the second direction, of the end that is of the first part (111) and that is away from the second part (112).

12. The end-face coupler according to any one of claims 9 to 11, comprising at least two side waveguides (3), wherein
a part of the at least two side waveguides (3) is located on one side of the middle waveguide (1), and the other part of the at least two side waveguides (3) is located on the other side of the middle waveguide (1).

13. The end-face coupler according to any one of claims 9 to 12, wherein the middle waveguide (1) and the side waveguide (3) are located in a same plane.

14. An optical communication apparatus, comprising an end-face coupler (1000), an optical fiber (2000), and an optoelectronic chip (3000), wherein
the end-face coupler (1000) is the end-face coupler according to any one of claims 1 to 13, the end-face coupler (1000) is located between the optical fiber (2000) and the optoelectronic chip (3000), and the end-face coupler (1000) is separately coupled to the optical fiber (2000) and the optoelectronic chip (3000).
